(19) Europäisches Patentamt
European Patent Office
Office européen des brevets

(11) **EP 1 111 762 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.⁷: **H02K 51/00**, H02K 16/00, B60K 6/04

(21) Anmeldenummer: **00123471.5**

(22) Anmeldetag: **07.11.2000**

(54) **Generator-Motor-Kombination**

Generator-motor combination

Combinaison moteur-générateur

(84) Benannte Vertragsstaaten:
**AT BE CH CY DE DK ES FI FR GB GR IE IT LI LU MC NL PT SE TR**

(30) Priorität: **14.12.1999 DE 19960168**

(43) Veröffentlichungstag der Anmeldung:
**27.06.2001 Patentblatt 2001/26**

(73) Patentinhaber: **Volkswagen Aktiengesellschaft 38436 Wolfsburg (DE)**

(72) Erfinder: **Warmers, Heinrich, Dr.-Ing. 28844 Weyhe (DE)**

(56) Entgegenhaltungen:
**DE-A- 19 704 271**        **DE-A- 19 754 264**
**DE-C- 4 408 719**

**Beschreibung**

Die vorliegende Erfindung betrifft eine Generator-Motor-Kombination nach dem Oberbegriff des Anspruches 1, welche insbesondere als elektromagnetischer Drehmomentwandler für ein Kraftfahrzeug verwendbar ist.

Die Nutzung eines elektromagnetischen Drehmomentwandlers im Antriebsstrang eines Kraftfahrzeugs ist im allgemeinen mit verschiedenen technischen und ökonomischen Problemen verbunden.

So ist beispielsweise die Nutzung zweier getrennter elektrischer Maschinen, nämlich eines Generators und eines Antriebsmotors, mit Nachteilen hinsichtlich des Wirkungsgrads, des Bauvolumens, des Gewichts und der anfallenden Kosten verbunden, so daß sich die Nutzung zweier getrennter elektrischer Maschinen bisher nicht durchsetzen konnte.

Daher wurde in der DE 44 08 719 C1 der Anmelderin eine Generator-Motor-Kombination nach dem Oberbegriff des Anspruches 1 vorgeschlagen, wobei in einem Gehäuse ein gemeinsamer Stator für einen Generator-Rotor und einen (Elektro)Motor-Rotor vorgesehen ist. Der Stator ist innerhalb der beiden hohlzylindrischen Rotoren axial verschiebbar gelagert. Die Statorwicklung des Stators wird abhängig von der relativen Lage der Permanentmagnete der beiden Rotoren geschaltet, um eine kontinuierliche Drehmomentübertragung von dem Generator-Rotor auf den Motor-Rotor sicherzustellen. Durch axiales Verschieben des Stators kann die Drehzahl und das auf die mit dem Motor-Rotor verbundene Ausgangswelle übertragbare Abtriebsdrehmoment eingestellt werden, da dadurch die im Generator- bzw. Motor-Rotor wirksame Leiterlänge der Statorwicklung entsprechend verändert wird. Wird der Stator zu dem Motor-Rotor hin verschoben, erhöht sich das abtriebsseitige Drehmoment und die Abtriebsdrehzahl geht zurück. Wird der Stator hingegen zu dem Generator-Rotor hin verschoben, nimmt die Abtriebsdrehzahl an der Ausgangswelle zu, während das Abtriebsdrehmoment verringert wird. Diese Generator-Motor-Kombination kann somit in Kraftfahrzeugen als elektromagnetischer Drehmomentwandler oder elektromagnetisches Getriebe verwendet werden.

Das in der DE 44 08 719 C1 beschriebene Prinzip ist gegenüber der Verwendung von zwei getrennten elektrischen Maschinen hinsichtlich des Bauvolumens und des Gewichts vorteilhaft. Dennoch ist die in der DE 44 08 719 C1 beschriebene Generator-Motor-Kombination mit verschiedenen Nachteilen verbunden. Da eine Reihenschaltung zwischen dem eingangsseitigen Generator-Rotor und dem ausgangsseitigen Motor-Rotor vorliegt, ist die Stromflußzeit und damit die Zeit der Drehmomentenübertragung in Wirkrichtung auf theoretisch maximal 50% beschränkt. In der Praxis wird sich die Stromflußzeit sogar weiter vermindern. Die Stromsumme der Teilwicklungen entspricht nicht dem Wert Null, wie es beispielsweise bei Drehfeldmaschinen der Fall ist, was zusätzliche Eisenverluste zur Folge hat. Des weiteren ergeben sich insbesondere bei der Übertragung von hohen Drehmomenten Probleme, da das übertragbare Drehmoment von dem Mittelwert des Strombelags proportional abhängig ist, während die ohmschen Verluste zu dem Effektivwert des Stromes proportional sind. Der Strombelag ist deutlich höher als bei üblichen Maschinenprinzipien, was jedoch zu Kühlproblemen führt. Darüber hinaus ist zu beachten, daß ein nahezu rechteckimpulsförmiger Stromverlauf erforderlich ist, um einen hohen Strommittelwert zu erzielen. Der hohe Oberwellenanteil eines derartigen Stromverlaufs und die hohe Anzahl der hierzu erforderlichen steilflankigen Schaltvorgänge erzeugen Wirbelstromverluste.

In der GB 2 307 109 A ist eine weitere bekannte Generator-Motor-Kombination beschrieben, wobei ein eingangsseitiger Generator-Rotor und ein ausgangsseitiger Motor-Rotor innerhalb eines gemeinsamen Stators angeordnet sind. Der Motor-Rotor ist zudem innerhalb des Generator-Rotors angeordnet. Der Stator ist im Gegensatz zu der aus der Druckschrift DE 44 08 719 C1 bekannten Anordnung unbeweglich angeordnet, so daß der Generator-Rotor bzw. der Motor-Rotor stets mit derselben Statorhälfte zusammenwirkt. Bei dieser Generator-Motor-Kombination kommt es zwar auch zu einer Drehmomentübertragung von dem Generator-Rotor über den Stator auf den Motor-Rotor, wobei jedoch aufgrund der unbeweglichen Anordnung des Stators keine Einstellung des Übersetzungsverhältnisses möglich ist.

Schließlich wird in der US 5,495,131 A eine elektrische Maschine beschrieben, welche mehrere konzentrisch angeordnete Statoren umfaßt, die zwischen entsprechenden hohlzylindrischen Rotorabschnitten eines Rotors angeordnet sind. Jeder Stator weist mehrere Nuten auf, in denen die entsprechenden Statorwicklungen angeordnet sind. Gemäß dem in dieser Druckschrift konkret beschriebenen Ausführungsbeispiel umfaßt der Rotor zwei Rotorabschnitte, während drei konzentrisch angeordnete Statoren vorgesehen sind, so daß beidseitig von jedem Rotorabschnitt ein Stator angeordnet ist.

Der vorliegenden Erfindung liegt die Aufgabe zugrunde, eine verbesserte Generator-Motor-Kombination vorzuschlagen, bei der einerseits die zuvor anhand der Druckschrift DE 44 08 719 C1 beschriebenen Nachteile gemindert sind und zudem hinsichtlich der Nutzung der Generator-Motor-Kombination als Energie- und Drehmomentwandler insbesondere bei hybriden Antriebsstrukturen eine erhöhte Flexibilität gegeben ist.

Diese Aufgabe wird erfindungsgemäß durch eine Generator-Motor-Kombination mit den Merkmalen des Anspruches 1 gelöst. Die Unteransprüche definieren bevorzugte und vorteilhafte Ausführungsformen der vorliegenden Erfindung.

Die erfindungsgemäße Generator-Motor-Kombination umfaßt zwei separate Statoren mit vorzugsweise mehreren galvanisch voneinander getrennten Statorwicklungen, wobei der eine Stator innerhalb des Generator-Rotors und Motor-Rotors axial verschiebbar angeordnet ist, während der andere Stator außerhalb der beiden Rotoren axial verschiebbar angeordnet ist. Auf diese Weise wird eine Generator-Motor-Kombination mit einem doppelten Luftspalt gebildet, wobei mit Hilfe der beiden Statoren die an dem Generator-Rotor bzw. Motor-Rotor angebrachten Permanentmagnete doppelt genutzt werden können, da die wirksame Oberfläche der Permanentmagnete verdoppelt ist.

Dies hat zur Folge, daß die im Betrieb anfallenden ohmschen Verluste sowie weitere stromabhängige Verluste, wie z.B. die lastabhängigen Wirbelstromverluste, halbiert werden können. Gegenüber der eingangs beschriebenen herkömmlichen Maschine mit lediglich einem Luftspalt wird pro Nutfläche der beiden Statoren eine Verringerung der Verlustleistung auf ein Viertel erzielt, wodurch die Kühlungsproblematik vermindert ist. Gleichzeitig wird auch das Bauvolumen reduziert, während das Gewicht der Gesamtanordnung nicht überproportional zunimmt.

Die erfindungsgemäße Generator-Motor-Kombination kann bevorzugt als elektromagnetischer Drehmomentwandler in einem Kraftfahrzeug eingesetzt werden. Die beiden Statoren lassen sich vorzugsweise unabhängig voneinander axial verschieben, so daß durch geeignete Verschiebung der beiden Statoren mehrere unterschiedliche Hybrid-Betriebsarten möglich sind. Damit dabei der Rückschluß für den inneren Stator stets sichergestellt ist, können an den Stirnflächen der Generator-Motor-Kombination Rückschlußringe vorgesehen werden, die zusammen mit dem äußeren Stator verschoben werden.

Die vorliegende Erfindung wird nachfolgend unter Bezugnahme auf die beigefügten Zeichnungen anhand eines bevorzugten Ausführungsbeispiels beschrieben. Dabei zeigt

Fig. 1 eine Längsquerschnittsansicht einer Generator-Motor-Kombination gemäß einem bevorzugten Ausführungsbeispiel der vorliegenden Erfindung,

Fig. 2 eine Schnittansicht entlang einer in Fig. 1 gezeigten Linie A-A', und

Fig. 3 die Anbindung der in Fig. 1 gezeigten Generator-Motor-Kombination an den Verbrennungsmotor und das Getriebe eines Kraftfahrzeugs, und

Fig. 4 eine mögliche Ausgestaltung für eine in Fig. 3 gezeigte steuerbare Schalteinheit.

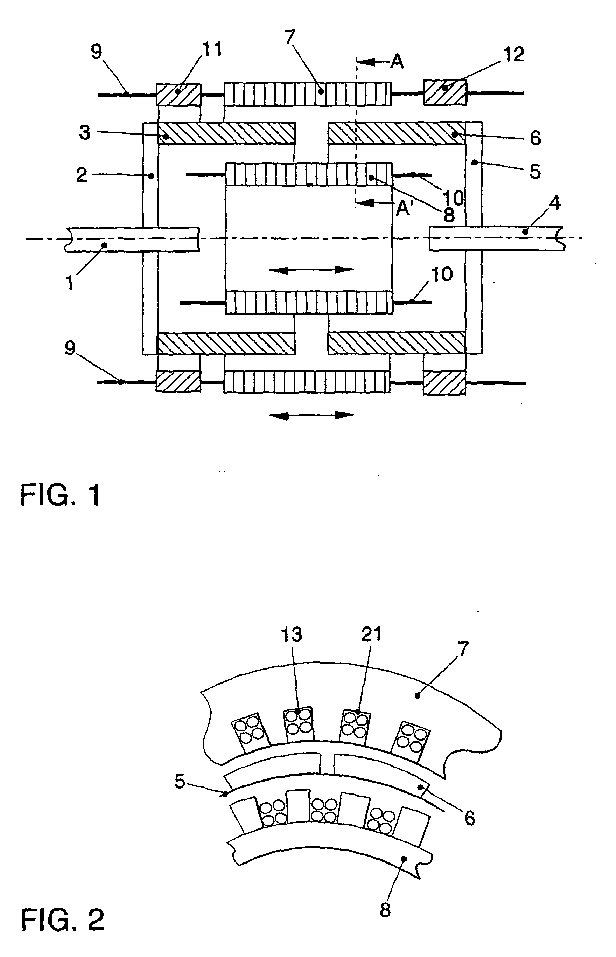

Die in Fig. 1 gezeigte Generator-Motor-Kombination umfaßt eine Eingangswelle 1, die mit einer nicht gezeigten Antriebsmaschine, insbesondere einem Verbrennungsmotor eines Kraftfahrzeugs, verbunden ist.

Diese Eingangswelle 1 trägt einen Generator-Rotor 2, der hohlzylindrisch ausgestaltet ist und mehrere mit wechselnder Polarität entlang seines Umfangs verteilte Permanentmagnete 3 aufweist. Auf der gegenüberliegenden Seite ist eine Ausgangswelle 4 vorgesehen, die mit einem hohlzylindrischen (Elektro)Motor-Rotor 5 verbunden ist. Auch der Motor-Rotor 5 trägt mehrere entlang seines Umfangs verteilte Permanentmagnete 6 mit wechselnder Polarität.

Im Innenraum der beiden axial nebeneinander angeordneten Rotoren 2 und 5 ist ein hohlzylindrischer Stator 8 angeordnet, der an Stangen 10 axial, d.h. in Längsrichtung der Maschine, verschiebbar gelagert ist. Darüber hinaus ist ein weiterer hohlzylindrischer Stator 7 vorgesehen, der die beiden Rotoren 2 und 5 umgibt, so daß die Rotoren 2 und 5 sowie der erstgenannte Stator 8 im hohlzylindrischen Innenraum des äußeren Stators 7 angeordnet sind. Auch der äußere Stator 7 ist an entsprechenden Stangen 9 axial verschiebbar gelagert.

Die beiden Statoren 7 und 8 tragen jeweils vorzugsweise mehrere Teilwicklungen (typischerweise zwischen drei und fünf Teilwicklungen pro Stator), die vollkommen voneinander galvanisch getrennt sein können. In Fig. 2 ist ein Axialschnitt entlang einer in Fig. 1 gezeigten Schnittlinie A-A' dargestellt, woraus ersichtlich ist, daß die einzelnen Statorwicklungen 13 der beiden Statoren 7 und 8 in gegenüberliegenden Nuten 21 angeordnet sind, so daß zwischen den Permanentmagneten des entsprechenden Rotors (im vorliegenden Fall den Permanentmagneten 6 des Motor-Rotors 5) jeweils ein Luftspalt zwischen den Statorwicklungen 13 des äußeren Stators 7 und den Statorwicklungen des inneren Stators 8 vorhanden ist. Die Winkelposition der sich gegenüberliegenden Nuten 21 der beiden Statoren 7 und 8 sollte derart gewählt werden, daß sich im Betrieb minimale Rastmomente einstellen. Die Rastmomente sind von der jeweiligen Ausgestaltung der Maschine abhängig, wobei die bestmöglichen Stellungen der Nuten zueinander durch geeignete Feldberechnungsprogramme ermittelt werden können. Da sich bei minimalen Rastmomenten auch die magnetische Leitfähigkeit über den Drehwinkel nur minimal ändert, ergibt sich eine minimale Wechseldurchflutung und somit minimale Hystere- und Wirbelstromverluste.

Das mit einer herkömmlichen Generator-Motor-Einheit mit lediglich einem Stator erzielbare Drehmoment M berechnet sich wie folgt aus dem Strombelag A, der Flußdichte B, der Leitungslänge 1 der Statorwicklung und dem Radius r des zwischen dem Stator und den Rotoren gebildeten Luftspalts:

$$M = l \cdot r^2 \cdot \int_{0}^{2\pi} B(x)A(x)\,dx$$

Bei der erfindungsgemäßen Generator-Motor-Maschine, bei der ein doppelter Luftspalt zwischen den Rotoren 2, 5 und den Statoren 7 und 8 gebildet ist, berechnet sich das Drehmoment M$_d$ folgendermaßen:

$$M_d = l \cdot r^2 \cdot \int\limits_{0}^{2\pi} 2B_d(x)A_d(x)dx$$

In der obigen Formel bezeichnet der Index "d" jeweils die Werte des Drehmoments, des magnetischen Flusses bzw. des Strombelags für den Fall der erfindungsgemäßen Verwendung zweier Statoren. Dabei ist zu berücksichtigen, daß sich die Luftspaltinduktion geringfügig verringert (beispielsweise von 0,85T auf 0,8T).

Um bei Vorsehen der beiden Statoren 7 und 8 dasselbe Drehmoment wie bei der herkömmlichen Anordnung mit lediglich einem Stator zu erhalten, d.h. um M = M$_d$ zu erzielen, kann von A$_d$(x) ≈ 0,5A(x) ausgegangen werden, d.h. der Strombelag wird bei Anwendung des erfindungsgemäßen Prinzips halbiert.

Die ohmsche Verlustleistung P berechnet sich aus dem Stromfluß 1 und dem Widerstand der Statorwicklung allgemein wie folgt:

$$P = I^2 \cdot R$$

Werden die beiden Statoren 7 und 8 verwendet, verdoppelt sich zwar der Gesamtwiderstand der Statorwicklungen. Da jedoch der um die Hälfte reduzierte Strom quadratisch in die Verlustleistung eingeht, kann insgesamt eine Halbierung der ohmschen Verlustleistung erzielt werden:

$$P_d = (0,5 \cdot I)^2 \cdot 2 \cdot R = 0,5 \cdot P$$

Durch die reduzierte Verlustleistung ist auch die Kühlungsproblematik entschärft. Zur Kühlung der Statoren 7 und 8 bzw. der gesamten Generator-Motor-Kombination kann daher beispielsweise eine Flüssigkeitskühlung genügen.

Die weiteren stromabhängigen Verluste, wie beispielsweise die lastabhängigen Wirbelstromverluste, werden ebenfalls verringert.

Die beiden Statoren 7 und 8 lassen sich vorzugsweise unabhängig voneinander axial verschieben. Damit der Rückschluß für den inneren Stator 8 auch dann gewahrt bleibt, wenn der äußere Stator 7 eine andere axiale Position wie der innere Stator 8 einnimmt, sind an den Stirnflächen der Generator-Motor-Kombination bzw. der beiden Rotoren 2 und 5 Rückschlußringe 11 und 12 angeordnet, die zusammen mit dem äußeren Stator 7 axial verschoben werden können.

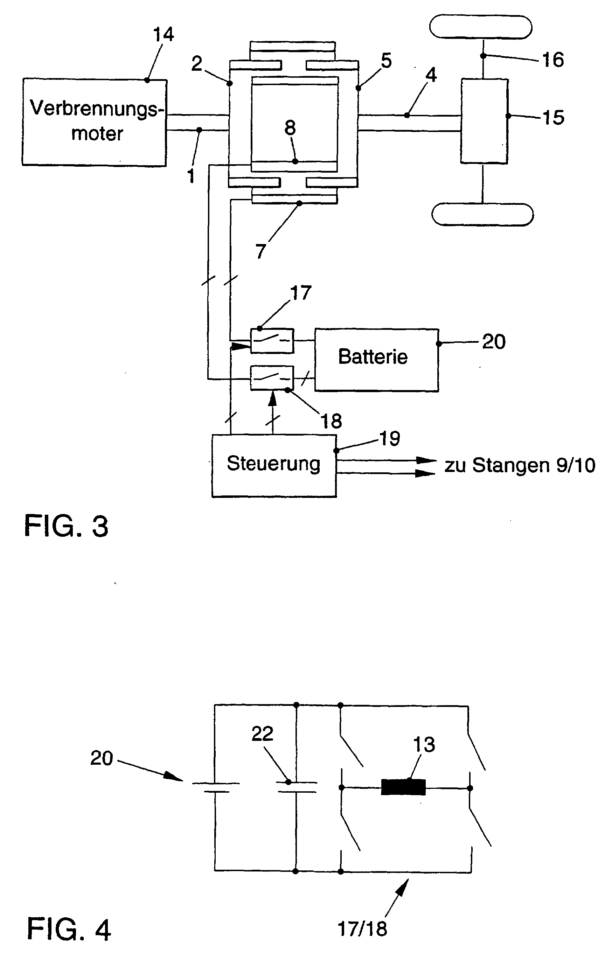

Durch die axiale Verschiebbarkeit der beiden Statoren 7 und 8 wird bewirkt, daß die für den Generator-Rotor 2 bzw. Motor-Rotor 5 wirksame Leiterlänge der entsprechenden Statorwicklungen 13 variiert werden kann. Auf dieser Variation der wirksamen Leiterlänge in den Magnetfelder des Generator-Rotors 2 bzw. Motor-Rotors 5 beruht die Steuer- bzw. Regelbarkeit der Drehzahl- und Drehmomentübersetzung der dargestellten Maschine. Die mit den Permanentmagneten 3 bzw. 6 bestückten Rotoren 2 bzw. 5 wirken auf die Statorwicklungen 13 der beiden Statoren 7 und 8. Durch die Drehung des Generator-Rotors 2 wird eine Änderung des magnetischen Flusses hervorgerufen, die in den einzelnen Statorwicklungen 13 eine elektromotorische Kraft induziert, wodurch es zu einem entsprechenden elektrischen Stromfluß kommt. Dieser Stromfluß bremst den Generator-Rotor 2 ab und treibt gleichzeitig den Motor-Rotor 5 an. Die durch die daraus resultierende Drehung des Motor-Rotors 5 wiederum hervorgerufene Flußänderung induziert in den Statorwicklungen 13 eine elektromotorische Gegenkraft. Da die für den Generator-Rotor 2 bzw. Motor-Rotor 5 wirksame Länge der Statorwicklungen 13 jeweils aufgeteilt werden kann, ergibt sich eine kontinuierliche Drehmomentwandlung. Dies soll nachfolgend näher anhand Fig. 3 erläutert werden.

In Fig. 3 ist der Antriebsstrang für einen Hybrid-Antrieb dargestellt, wobei die Eingangswelle der Generator-Motor-Kombination von einem Verbrennungsmotor 14 angetrieben wird, während die Ausgangswelle 4 über ein Getriebe 15 mit dem Fahrwerk 16 eines Kraftfahrzeugs zum Antrieb der Fahrzeugräder gekoppelt ist.

Wie bereits erwähnt worden ist, wird in den Statoren 7 und 8 eine Spannung induziert, falls der Generator-Rotor 2 von dem Verbrennungsmotor 14 angetrieben wird. Der daraus resultierende Stromfluß in den entsprechenden Statorwicklungen hat eine auf den Motor-Rotor 5 wirkende Kraft zur Folge, welche dieselbe Richtung wie die Drehbewegung des Generator-Rotors 2 besitzt, falls den Permanentmagneten des Generator-Rotors 2 die Permanentmagnete des Motor-Rotors 5 mit jeweils entgegengesetzter Polarität gegenüberliegen. Stehen sich jeweils zwei Permanentmagnete gleicher Polarität gegenüber, wirkt die auf den Motor-Rotor 5 übertragene Kraft in entgegengesetzter Richtung zu der Drehrichtung des Generator-Rotors 2.

Da die Permanentmagnete auf den beiden Rotoren 2 und 5 jeweils mit abwechselnder Polarität angeordnet sind, wirkt bei der Drehung des Generator-Rotors eine Kraft mit ständig wechselndem Vorzeichen auf den Motor-Rotor, falls die einzelnen Statorwicklungen dauerhaft kurzgeschlossen sind. Es kommt daher auch bei abtriebsseitigem Leerlauf keine Drehbewegung zustande. Daher sind für die Statoren 7 und 8 Schalteinheiten 17 bzw. 18 erforderlich, die für die jeweils gewünschte "richtige" Stellung der Permanentmagnete einen Stromfluß über die entsprechenden Statorwicklungen ermöglichen und für die unerwünschte "falsche" Stellung der Permanentmagnete einen Stromfluß unterbinden. Welche Stellung der Permanentmagnete "richtig" oder "falsch" ist, hängt wie beschrieben von der gewünschten Antriebsrichtung des Motor-Rotors 5 ab.

Wird beispielsweise ein Antrieb des Motor-Rotors 5 in dieselbe Richtung wie die Drehrichtung des Generator-Rotors 2 gewünscht, wird mit Hilfe der Schalteinheiten 17 bzw. 18 ein Stromfluß immer dann unterbrochen, wenn sich Permanentmagnete mit identischer Polarität gegenüberstehen. Die Ansteuerung der Schalteinheiten 17 und 18 erfolgt durch eine Steuereinheit 19, der die augenblickliche Stellung der Permanentmagnete auf dem Generator-Rotor 2 und dem Motor-Rotor 5 beispielsweise von (nicht gezeigten) Magnetsensoren mitgeteilt wird. Die Steuereinheit 19 kann die Schalteinheiten 17 und 18 so ansteuern, daß neben der reinen Drehrichtungssteuerung des Motor-Rotors 5 auch ein sogenannter Vier-Quadranten-Betrieb, d.h. sowohl positive als auch negative Drehzahlen und Drehmomente, des Generator-Rotors 2 und des Motor-Rotors 5 ermöglicht wird. Die Steuerung 19 ist bei dem dargestellten Ausführungsbeispiel darüber hinaus auch zur axialen Verschiebung des inneren Stators 8 und des äußeren Stators 7 vorgesehen. Zur Energiespeicherung ist ein Energiespeicher 20, beispielsweise die Fahrzeugbatterie, vorgesehen.

In Fig. 4 ist eine mögliche Realisierung der Schalteinheiten 17 und 18 dargestellt. Die Schalteinheit ist in Form einer mit einer Kapazität 22 verschalteten Brückenschaltung mit vier elektronischen Leistungsschaltem ausgestaltet, wobei in der Diagonalen dieser Brückenschaltung die entsprechende Statorwicklung 13 angeordnet ist. Für jede Statorwicklung 13 ist eine derartige Brückenschaltung erforderlich, so daß insgesamt sechs Brückenschaltungen vorgesehen werden müssen, wenn der innere Stator 8 und der äußere Stator 7 beispielsweise jeweils drei Statorwicklungen 13 tragen. Der Energiespeicher 20 ist vorzugsweise wie in Fig. 4 gezeigt mit der Brückenschaltung zu verbinden.

Wie in Fig. 3 und Fig. 4 gezeigt ist, sind die einzelnen Statorwicklungen 13 des inneren und äußeren Stators 7 und 8 mit dem Energiespeicher 20, so daß bei Induktion einer elektrischen Spannung in den einzelnen Statorwicklungen 13 während des Betriebs die entsprechende elektrische Energie gespeichert werden kann (Generatorbetrieb). Des weiteren kann mit Hilfe des Energiespeicher 20 den Statorwicklungen auch gespeicherte Energie zugeführt werden, um die Rotoren in Drehung zu versetzen (Motorbetrieb). Die Betriebsarten Generator- bzw. Motorbetrieb werden in der Steuereinheit 19 durch entsprechende Zuordnung der Pollagen der Rotoren 2 und 5 zu den Einschaltsignalen der Leistungstransistoren der Schalteinheiten 17 und 18 vorgegeben.

Es ist möglich, unterschiedliche Betriebsarten der Statoren 7 und 8 vorzusehen. Der in Fig. 3 gezeigte hybride Antriebsstrang kann grundsätzlich für verschiedene Aufgaben eingesetzt werden: (1) Energiesparbetriebsarten durch Vermeidung von Teillastbetriebsweisen des Verbrennungsmotors 14 und Nutzbremsung, (2) reiner Elektrofahrbetrieb und (3) emissionsarmer Betrieb des Verbrennungsmotors 14 durch Vermeidung von Drehzahl- und Lastsprüngen sowie Leerlaufzeiten des Verbrennungsmotors 14, Schwungnutzautomatik.

Durch eine geeignete und voneinander unabhängige axiale Verschiebung der beiden Statoren 7 und 8 können die folgenden unterschiedlichen Betriebsarten des Hybrid-Antriebs realisiert werden, wobei die axiale Länge der beiden Statoren 7 und 8 unterschiedlich sein kann, um einen weiteren Freiheitsgrad zu erhalten und die Flexibilität weiter zu steigern.

Wird der äußere Stator 7 gegenüber dem inneren Stator 8 zu dem Verbrennungsmotor 14 bzw. dem Generator-Rotor 2 hin verschoben, wird im Generatorbetrieb ein zusätzliches Lastmoment für den Verbrennungsmotor 14 aufgebracht. Diese Betriebsart ist insbesondere dann sinnvoll, wenn der Verbrennungsmotor 14 ohne zusätzliche Lastaufschaltung relativ stark in einem Teillastbetrieb betrieben werden würde. Die Energie der Lastaufschaltung wird in dem Energiespeicher 20 zwischengespeichert. Die Lastaufschaltung kann beispielsweise auch dazu genutzt werden, die Drehzahl des Verbrennungsmotors 14 bei Lastwechseln schlagartig zu reduzieren, um z.B. Emissionen und einen Leerlauf-Kraftstoffverbrauch zu vermeiden. Im Motorbetrieb ist diese Betriebsart sinnvoll, um die Drehzahl des Verbrennungsmotors schlagartig zu erhöhen oder den Verbrennungsmotor anzulassen bzw. zu starten.

Wird der äußere Stator 7 gegenüber dem inneren Stator 8 zur Abtriebsseite bzw. dem Motor-Rotor 2 hin verschoben, hat dies im Generatorbetrieb eine Nutzbremsung zur Folge. Im Motorbetrieb kann hingegen eine Verstärkung des abtriebsseitigen Drehmoments erzielt werden, so daß die Maschine als "Antriebsbuster" wirkt. In Beschleunigungsphasen kann somit dem mit Hilfe des Verbrennungsmotors 14 aufgebrachten Antriebsdrehmoment ein zusätzliches Drehmoment hinzuaddiert werden.

In einer weiteren Betriebsart werden die beiden Statoren 7 und 8 zueinander synchron verschoben, so daß die Gesamtanordnung analog zu der aus der Druckschrift DE 44 08 719 C1 bekannten Anordnung im Generatorbetrieb als elektromagnetisches Getriebe und im Motorbetrieb als Anlasser für den Verbrennungsmotor 14 wirkt. Werden die beiden Statoren 7 und 8 zu dem Motor-Rotor 5 hin verschoben, wird eine Erhöhung des abtriebsseitigen Drehmoments erzielt, wobei die Abtriebsdrehzahl zurückgeht. Werden die beiden Statoren 7 und 8 hingegen zu dem Generator-Rotor 2 hin verschoben, wird eine Reduzierung des abtriebsseitigen Drehmoments erzielt, und die Abtriebsdrehzahl nimmt zu. Befinden sich beide Statoren 7 und 8 nahezu vollständig im Bereich des Motor-Rotors 5, erfolgt im Motorbetrieb, d.h. bei Speisung der beiden Statoren 7 und 8 mit elektrischer Energie aus dem Energiespeicher 20, ein reiner Elektrofahrbetrieb. Werden die beiden Statoren 7 und 8 hingegen nahezu vollständig in den Bereich des Generator-Rotors 2 verschoben, läuft die Maschine im Leerlauf und dient als Schwungnutzautomatik. Diese Stellung ist im Motorbetrieb die Start- oder Anlass-Stellung des Verbrennungsmotors 14.

**BEZUGSZEICHENLISTE**

1    Antriebswelle
2    Generator-Rotor
3    Permanentmagnet
4    Abtriebswelle
5    Elektromotor-Rotor
6    Permanentmagnet
7    Äußerer Stator
8    Innerer Stator
9    Äußere Verschiebestange
10   Innere Verschiebestange
11   Rückschlußring
12   Rückschlußring
13   Statorwicklung
14   Verbrennungsmotor
15   Getriebe
16   Fahrwerk
17   Schalteinheit
18   Schalteinheit
19   Steuereinheit
20   Batterie
21   Nut
22   Kapazität

**Patentansprüche**

1. Generator-Motor-Kombination,
   mit einem an einer Eingangswelle (1) befestigten Generator-Rotor (2), wobei an dem Generator-Rotor (2) Generator-Permanentmagnete (3) angebracht sind,
   mit einem an einer Ausgangswelle (4) befestigten Motor-Rotor (5), wobei an dem Motor-Rotor (5) Motor-Permanentmagnete (6) angebracht sind, und
   mit einem ersten Stator (8) mit mindestens einer Statorwicklung (13), wobei der erste Stator (8) innerhalb des Generator-Rotors (2) und Motor-Rotors (5) axial verschiebbar angeordnet ist, **dadurch gekennzeichnet, daß** ein zweiter Stator (7) mit mindestens einer Statorwicklung (13) außerhalb des Generator-Rotors (2) und Motor-Rotors (5) axial verschiebbar angeordnet ist.

2. Generator-Motor-Kombination nach Anspruch 1, **dadurch gekennzeichnet, daß** der erste Stator (8) und der zweite Stator (7) unabhängig voneinander axial verschiebbar gelagert sind:

3. Generator-Motor-Kombination nach Anspruch 1 oder 2, **dadurch gekennzeichnet, daß** der erste Stator (7) und der zweite Stator (8) jeweils mehrere Statorwicklungen (13) trägt, die voneinander galvanisch getrennt sind.

4. Generator-Motor-Kombination nach Anspruch 3, **dadurch gekennzeichnet, daß** der erste Stator (7) und der zweite Stator (8) jeweils drei bis fünf Statorwicklungen (13) trägt, die voneinander galvanisch getrennt sind.

5. Generator-Motor-Kombination nach Anspruch 3 oder 4, **dadurch gekennzeichnet, daß** die Statorwicklungen (13) des ersten Stators (8) in an der Außenseite des ersten Stators (8) ausgebildeten Nuten (21) angeordnet sind, und
   daß die Statorwicklungen (13) des zweiten Stators (7) in an der Innenseite des zweiten Stators (7) ausgebildeten Nuten (21) angeordnet sind, so daß die Nuten (21) des ersten Stators (8) gegenüberliegend zu den Nuten (21) des zweiten Stators (7) angeordnet sind, wobei die Nuten (21) des ersten Stators (7) derart versetzt zu den Nuten des zweiten Stators (8) angeordnet sind, daß ein minimales Rastmoment auftritt.

6. Generator-Motor-Kombination nach einem der vorhergehenden Ansprüche, **dadurch gekennzeichnet, daß** an den beiden Stirnseiten der Generator-Motor-Kombination außerhalb des Generator-Rotors (2) und des Motor-Rotors (5) Rückschlußringe (11,12) angeordnet sind, welche zusammen mit dem zweiten Stator (7) axial verschiebbar sind.

7. Generator-Motor-Kombination nach einem der vorhergehenden Ansprüche, **dadurch gekennzeichnet, daß** Flüssigkeitskühlmittel zum Kühlen der Generator-Motor-Kombination vorgesehen sind.

8. Generator-Motor-Kombination nach einem der vorhergehenden Ansprüche, **dadurch gekennzeichnet, daß** der Generator-Rotor (2) und der Motor-Rotor (5) sowie der erste Stator (8) und der zweite Stator (7) jeweils hohlzylindrisch ausgestaltet sind, wobei der Generator-Rotor (2) und der Motor-Rotor (5) in axialer Richtung nebeneinander angeordnet sind.

9. Generator-Motor-Kombination nach einem der vorhergehenden Ansprüche, **dadurch gekennzeichnet, daß** die Generator-Permanentmagnete (3) und die Motor-Permanentmagnete (6) mit jeweils wechselner Polarität an dem Generator-Rotor (2) bzw. Motor-Rotor (5) angebracht sind,
   daß erste Schaltmittel (18) zum Schalten der mindestens einen Statorwicklung (13) des ersten Stators (8) und zweite Schaltmittel (17) zum Schalten der mindestens einen Statorwicklung (13) des zweiten Stators (7) vorgesehen sind, und
   daß Steuermittel (19) vorgesehen sind, um die ersten und zweiten Schaltmittel (17,18) abhängig von der relativen Stellung der Generator-Permanentmagnete (3) und der Motor-Permanentmagnete (6) anzusteuern.

**10.** Generator-Motor-Kombination nach Anspruch 9, **dadurch gekennzeichnet, daß** die ersten und zweiten Schaltmittel (17,18) für jede Statorwicklung (13) des ersten Stators (8) bzw. zweiten Stators (7) jeweils eine Brückenschaltung mit steuerbaren Schaltern umfassen, in deren Brückendiagonale die jeweilige Statorwicklung (13) angeordnet ist.

**11.** Verwendung einer Generator-Motor-Kombination nach einem der vorhergehenden Ansprüche als elektromagnetischer Drehmoment-Wandler, wobei durch axiales Verschieben des ersten Stators (8) und/oder des zweiten Stators (7) das auf die Ausgangswelle (4) übertragene Drehmoment eingestellt wird.

**12.** Verwendung nach Anspruch 11, **dadurch gekennzeichnet, daß** entweder (a) gleichzeitig das Eingangs-Drehmoment und das Ausgangs-Drehmoment oder (b) das Eingangs-Drehmoment oder das Ausgangs-Drehmoment der Generator-Motor-Kombination durch axiales Verschieben des ersten Stators (8) und/oder des zweiten Stators (7) und/ oder durch Steuerung des Leistungsflusses durch die ersten Schaltmittel (17) und/oder zweiten Schaltmittel (18) eingestellt wird.

**13.** Verwendung nach Anspruch 11 oder 12, **dadurch gekennzeichnet, daß** die Generator-Motor-Kombination in einem hybriden Antriebsstrang verwendet wird.

**14.** Verwendung nach einem der Ansprüche 11-13, **dadurch gekennzeichnet, daß** in einer ersten Betriebsart der zweite Stator (7) gegenüber dem ersten Stator (7) zu dem Generator-Rotor (2) hin verschoben wird, während in einer zweiten Betriebsart der zweite Stator (7) gegenüber dem ersten Stator (8) zu dem Motor-Rotor (5) hin, in einer dritten Betriebsart sowohl der erste Stator (8) als und der zweite Stator (7) zu dem Motor-Rotor (5) hin und in einer vierten Betriebsart sowohl der erste Stator (8) als auch der zweite Stator (7) zu dem Generator-Rotor (2) hin verschoben wird.

## Claims

**1.** Generator/motor combination
having a generator rotor (2) which is mounted on an input shaft (1), generator permanent magnets (3) being fitted to the generator rotor (2),
having a motor rotor (5) which is mounted on an output shaft (4), motor permanent magnets (6) being fitted to the motor rotor (5), and
having a first stator (8) with at least one stator winding (13), the first stator (8) being axially displaceably arranged inside the generator rotor (2) and motor rotor (5), **characterized in that** a second stator (7) with at least one stator winding (13) is axially displaceably arranged outside the generator rotor (2) and motor rotor (5).

**2.** Generator/motor combination according to Claim 1, **characterized in that** the first stator (8) and the second stator (7) are axially displaceably mounted independently of one another.

**3.** Generator/motor combination according to Claim 1 or 2, **characterized in that** the first stator (8) and the second stator (7) each have a plurality of stator windings (13) which are electrically isolated from one another.

**4.** Generator/motor combination according to Claim 3, **characterized in that** the first stator (8) and the second stator (7) each have three to five stator windings (13) which are electrically isolated from one another.

**5.** Generator/motor combination according to Claim 3 or 4, **characterized**
**in that** the stator windings (13) of the first stator (8) are arranged in slots (21) formed on the outside of the first stator (8), and
**in that** the stator windings (13) of the second stator (7) are arranged in slots (21) formed on the inside of the second stator (7), such that the slots (21) of the first stator (8) are arranged opposite the slots (21) of the second stator (7), the slots (21) of the first stator (8) being arranged with an offset with respect to the slots of the second stator (7) such that a minimum cogging torque is produced.

**6.** Generator/motor combination according to one of the preceding claims, **characterized in that** return rings (11, 12) are arranged at the two end faces of the generator/motor combination outside the generator rotor (2) and the motor rotor (5) and are axially displaceable together with the second stator (7).

**7.** Generator/motor combination according to one of the preceding claims, **characterized in that** liquid coolants are provided for cooling the generator/motor combination.

**8.** Generator/motor combination according to one of the preceding claims, **characterized in that** the generator rotor (2) and the motor rotor (5) and also the first stator (8) and the second stator (7) are each of hollow-cylindrical design, the generator rotor (2) and the motor rotor (5) being arranged next to one another in the axial direction.

9. Generator/motor combination according to one of the preceding claims, **characterized in that** the generator permanent magnets (3) and the motor permanent magnets (6) are fitted, with alternating polarity, to the generator rotor (2) and, respectively, to the motor rotor (5),
   **in that** first switching means (18) are provided for switching the at least one stator winding (13) of the first stator (8), and second switching means (17) are provided for switching the at least one stator winding (13) of the second stator (7), and
   **in that** control means (19) are provided in order to activate the first and second switching means (17, 18) as a function of the relative position of the generator permanent magnets (3) and of the motor permanent magnets (6).

10. Generator/motor combination according to Claim 9, **characterized in that** the first and second switching means (17, 18) for each stator winding (13) of the first stator (8) and, respectively, of the second stator (7) each comprise a bridge circuit with controllable switches, the respective stator winding (13) being arranged in the diagonal of the said bridge.

11. Use of a generator/motor combination according to one of the preceding claims as an electromagnetic torque converter, the torque which is transmitted to the output shaft (4) being set by axial displacement of the first stator (8) and/or of the second stator (7).

12. Use according to Claim 11, **characterized in that** either (a) the input torque and the output torque of the generator/motor combination are simultaneously set, or (b) the input torque or the output torque of the generator/motor combination is set, by axial displacement of the first stator (8) and/or of the second stator (7) and/or by controlling the flow of power through the first switching means (17) and/or second switching means (18).

13. Use according to Claim 11 or 12, **characterized in that** the generator/motor combination is used in a hybrid drive train.

14. Use according to one of Claims 11-13, **characterized in that** the second stator (7), with respect to the first stator (8), is displaced towards the generator rotor (2) in a first mode of operation, whereas in a second mode of operation the second stator (7), with respect to the first stator (8), is displaced towards the motor rotor (5), in a third mode of operation both the first stator (8) and the second stator (7) are displaced towards the motor rotor (5), and in a fourth mode of operation both the first stator (8) and the second stator (7) are displaced towards the generator rotor (2).

## Revendications

1. Combinaison générateur-moteur
   avec un rotor (2) du générateur fixé sur un arbre d'entrée (1), des aimants permanents (3) du générateur étant montés sur le rotor (2) du générateur, avec un rotor (5) du moteur fixé sur un arbre de sortie (4), des aimants permanents (6) du moteur étant montés sur le rotor (5) du moteur, et
   avec un premier stator (8) ayant au moins un enroulement statorique (13), le premier stator (8) étant disposé à coulissement axial à l'intérieur du rotor (2) du générateur et du rotor (5) du moteur, **caractérisée en ce qu'**un deuxième stator (7) ayant au moins un enroulement statorique (13) est disposé à coulissement axial à l'extérieur du rotor (2) du générateur et du rotor (5) du moteur.

2. Combinaison générateur-moteur selon la revendication 1, **caractérisée en ce que** le premier stator (8) et le deuxième stator (7) sont montés indépendamment l'un de l'autre à coulissement axial.

3. Combinaison générateur-moteur selon la revendication 1 ou 2, **caractérisée en ce que** le premier stator (8) et le deuxième stator (7) portent chacun plusieurs enroulements statoriques (13) qui sont isolés galvaniquement l'un de l'autre.

4. Combinaison générateur-moteur selon la revendication 3, **caractérisée en ce que** le premier stator (8) et le deuxième stator (7) portent chacun trois à cinq enroulements statoriques (13) qui sont isolés galvaniquement l'un de l'autre.

5. Combinaison générateur-moteur selon la revendication 3 ou 4, **caractérisée en ce que** les enroulements statoriques (13) du premier stator (8) sont disposés dans des rainures (21) pratiquées dans la face extérieure du premier stator (8) et que les enroulements statoriques (13) du deuxième stator (7) sont disposés dans des rainures (21) pratiquées dans la face intérieure du deuxième stator (7) de sorte que les rainures (21) du premier stator (8) sont disposées en regard des rainures (21) du deuxième stator (7), les rainures (21) du premier stator (8) étant décalées par rapport aux rainures du deuxième stator (7) de manière à obtenir un couple d'encliquetage minime.

6. Combinaison générateur-moteur selon l'une quelconque des revendications précédentes, **caractérisée en ce que** des bagues de court-circuit (11, 12) sont disposées à l'extérieur du rotor (2) du générateur et du rotor (5) du moteur sur les deux faces frontales de la combinaison générateur-moteur, ces bagues étant aptes à coulisser axialement conjointement avec le deuxième stator (7).

7. Combinaison générateur-moteur selon l'une quelconque des revendications précédentes, **caractérisée en ce que** sont prévus des moyens de refroidissement par liquide pour refroidir la combinaison générateur-moteur.

8. Combinaison générateur-moteur selon l'une quelconque des revendications précédentes, **caractérisée en ce que** le rotor (2) du générateur et le rotor (5) du moteur ainsi que le premier stator (8) et le deuxième stator (7) sont chacun conformés sous forme de cylindre creux, le rotor (2) du générateur et le rotor (5) du moteur étant disposés l'un à côté de l'autre dans la direction axiale.

9. Combinaison générateur-moteur selon l'une quelconque des revendications précédentes, **caractérisée en ce que** les aimants permanents (3) du générateur et les aimants permanents (6) du moteur sont respectivement montés sur le rotor (2) du générateur et sur le rotor (5) du moteur en polarisation alternée,
que sont prévus des premiers moyens de commutation (18) pour commuter l'au moins un enroulement statorique (13) du premier stator (8) et des deuxièmes moyens de commutation (17) pour commuter l'au moins un enroulement statorique (13) du deuxième stator (7) et
que sont prévus des moyens de commande (19) pour activer les premiers et les deuxièmes moyens de commutation (17, 18) en fonction de la position relative des aimants permanents (3) du générateur et des aimants permanents (6) du moteur.

10. Combinaison générateur-moteur selon la revendication 9, **caractérisée en ce que** les premiers et les deuxièmes moyens de commutation (17, 18) pour chaque enroulement statorique (13) du premier stator (8) et du deuxième stator (7) comprennent respectivement un montage en pont avec des commutateurs commandables, l'enroulement statorique (13) respectif étant disposé dans la diagonale du pont des commutateurs.

11. Utilisation d'une combinaison générateur-moteur selon l'une quelconque des revendications précédentes comme convertisseur de couple électromagnétique, le réglage du couple transmis à l'arbre de sortie (4) s'effectuant par coulissement axial du premier stator (8) et/ou du deuxième stator (7).

12. Utilisation selon la revendication 11, **caractérisée en ce que** sont réglés soit (a) simultanément le couple d'entrée et le couple de sortie soit (b) le couple d'entrée ou le couple de sortie de la combinaison générateur-moteur par coulissement axial du premier stator (8) et/ou du deuxième stator (7) et/ou par commande de l'énergie passant à travers les premiers moyens de commutation (17) et/ou les deuxièmes moyens de commutation (18).

13. Utilisation selon la revendication 11 ou 12, **caractérisée en ce que** la combinaison générateur-moteur est utilisée dans un groupe motopropulseur hybride.

14. Utilisation selon l'une quelconque des revendications 11 à 13, **caractérisée en ce que**, dans un premier mode de fonctionnement, le deuxième stator (7) est déplacé par rapport au premier stator (8) en rapprochement du rotor (2) du générateur tandis que dans un deuxième mode de fonctionnement le deuxième stator (7) est déplacé par rapport au premier stator (8) en rapprochement du rotor (5) du moteur, que dans un troisième mode de fonctionnement le premier stator (8) et le deuxième stator (7) sont déplacés vers le rotor (5) du moteur et que dans un quatrième mode de fonctionnement le premier stator (8) et le deuxième stator (7) sont déplacés vers le rotor (2) du générateur.

FIG. 1

FIG. 2

Verbrennungs-moter

zu Stangen 9/10

Batterie

Steuerung

FIG. 3

FIG. 4

17/18